# EUROPEAN PATENT APPLICATION

(11) **EP 3 965 486 A1**
(43) Date of publication of application: **09.03.2022**
(21) Application number: 21202958.1
(22) Date of filing: 08.08.2017
(51) Int. Cl.: H04W 68/00, H04W 74/00, H04W 48/20, H04W 24/10

(54) **PAGING METHOD, APPARATUS AND SYSTEM, AND USER EQUIPMENT**

(30) Priority: 10.08.2016 CN 201610651625; 28.09.2016 CN 201610861921
(62) Divisional of application: 17838706.4
(71) Applicant: ZTE Corporation, Shenzhen, Guangdong 518057 (CN)
(72) Inventor: LIU, Xu, Shenzhen, Guangdong, 518057 (CN); DAI, Bo, Shenzhen, Guangdong, 518057 (CN); SHA, Xiubin, Shenzhen, Guangdong, 518057 (CN)
(74) Representative: Iannone, Carlo Luigi

(57) **Abstract**

Disclosed in embodiments of the present disclosure are a paging method, apparatus and system and a user equipment, which relate to the field of communications, and are for use in resolving the problems in the prior art of limitation of a paging capacity and imbalance of load caused when a non-anchor carrier in a multi -carrier cell cannot receive a paging massage. The method comprises: receiving a paging message from a base station on a first non-anchor carrier in a multi-carrier cell, the paging message carrying downlink data arrival indication information and/or system message change indication information; and initiating a random access according to the paging message, and/or receiving a changed system message, the multi-carrier cell comprising one anchor carrier and multiple non-anchor carrier.

## Description

### TECHNICAL FIELD

The present disclosure relates to the field of communication, and more particularly to a paging method, a paging apparatus, a paging system, and user equipment.

### BACKGROUND

In future mobile network applications, the demand for traffic, the number of terminals, and the types of terminals will all show an increasing trend. As one of the important scenes and technical means of 5G, Machine Type Communication (MTC) is receiving more and more attention. In the MTC topic, for the characteristics of low-cost low-throughput type terminals, a sub-topic of Narrowband-Internet of Things (NB-IoT) is proposed: providing low-throughput wireless communication service for NB-IoT low-cost terminals using the 200kHZ band.

In view of this, the concept of multi-carrier (Multi-Carrier) cell is proposed in the 3GPP R13 phase. That is, a cell consists of multiple frequency points, and each frequency point/carrier occupies a narrow band of 200 khz, but only one frequency point carries a NarrowBand-Primary Synchronization Signal/Secondary Synchronization Signal (NB-PSS/SSS), a Narrowband-Physical Broadcast Channel (NB-PBCH), and a System Information Block (SIB). Such frequency is called as an Anchor-Carrier carrier or an Anchor-Physical Resource Block (Anchor-PRB).Other frequency points are called Non Anchor-Carriers or Non Anchor-PRBs (Non Anchor-Physical Resource Blocks). These non-anchor carriers do not carry NB-PSS/SSS, NB-PBCH, and SIB, and only carry data service-related channels, such as NarrowBand-Physical Downlink Control Channel (NB-PDCCH), NarrowBand-Physical Downlink Shared Channel (NB-PUSCH) and NarrowBand-Physical Uplink Shared Channel (NB-PUSCH). In this way, the overhead of the common channel can be saved, and the number of inter-frequency cells can be reduced.

However, for such a cell structure, paging is only carried on the Anchor-Carrier, which results in greatly limited capacity of the paging, and the carrier load of frequency points is not balanced.

### SUMMARY

The technical problem to be solved by the present disclosure is to provide a paging method, a paging apparatus, a paging system, and user equipment, which are intended to solve the problem in the related art that a non-anchor carrier in a multi-carrier cell cannot receive a paging message, the paging capacity is limited, and the load is imbalance.

According to an embodiment of the present disclosure, the present disclosure provides a paging method, including: receiving a paging message from a base station on a first non-anchor carrier of a multi-carrier cell, the paging message carrying downstream data arrival indication information and/or system message change indication information; and initiating a random access and/or receiving a changed system message according to the paging message; wherein the multi-carrier cell includes an anchor carrier and a plurality of non-anchor carriers.

Optionally, the paging message carries the downlink data arrival indication information; the initiating a random access and/or receiving a changed system message according to the paging message includes: determining whether the first non-anchor carrier is configured with a corresponding random access resource; when the first non-anchor carrier is configured with the corresponding random access resource, initiating random access from the first non-anchor carrier; and when the first non-anchor carrier is not configured with the random access resource, jumping to other non-anchor carrier or the anchor carrier and initiating random access.

Optionally, when the first non-anchor carrier is not configured with the random access resource, jumping to other non-anchor carrier or the anchor carrier and initiating random access includes: when the other non-anchor carrier than the first non-anchor carrier is configured with the random access resource, jumping to one of the non-anchor carriers configured with the random access resource and initiating random access ; and when the other non-anchor carrier than the first non-anchor carrier is not configured with the random access resource, jumping to the anchor carrier and initiating random access from the anchor carrier.

Optionally, the paging message carries the system message change indication information; the initiating a random access and/or receiving a changed system message according to the paging message includes: jumping from the first non-anchor carrier to the anchor carrier according to the system message change indication information; and receiving the changed system message on the anchor carrier.

Optionally, before receiving the paging message from the base station on the first non-anchor carrier of the multi-carrier cell, the method further includes: selecting the anchor carrier or a non-anchor carrier to receive the paging message from the base station according to a paging carrier selection policy.

Optionally, the paging carrier selection strategy includes: in a plurality of paging cycles contained in a period of time, performing modulo N arithmetic on the paging cycle sequence number, and the paging cycles with the same result utilizing the same paging carrier, where N is an integer greater than 1 and less than the paging cycle sequence number.

Optionally, the paging carrier selection strategy includes: performing time division multiplexing on the anchor carrier and each of the non-anchor carriers according to a time domain radio frame configured by the base station.

Optionally, the paging carrier selection policy includes selecting a paging carrier based on a mapping relationship between a coverage enhancement level and a paging carrier configured by the base station.

Optionally, the method further includes: when in a RRC (Radio Resource Control) idle state, camping on the anchor carrier or the non-anchor carrier of the multi-carrier cell.

Optionally, the method further includes: when camping on the non-anchor carrier, acquiring an intra-frequency cell list and an inter-frequency cell list based on a frequency point of the non-anchor carrier to perform intra-frequency measurement, inter-frequency measurement for cell reselection on the non-anchor carrier.

Optionally, the acquiring an intra-frequency cell list and an inter-frequency cell list based on a frequency point of the non-anchor carrier includes: receiving a first system message, the first system message including an intra-frequency cell list and an inter-frequency cell list based on the frequency point of the anchor carrier; and converting the intra-frequency cell list and the inter-frequency cell list based on the frequency point of the anchor carrier into an intra-frequency cell list and an inter-frequency cell list based on a frequency point of the non-anchor carrier; or receiving a second system message, the second system message including intra-frequency cell lists and inter-frequency cell lists with respect to the frequency point of the anchor carrier and frequency points of all non-anchor carriers.

According to another embodiment of the present disclosure, the present disclosure provides a paging apparatus, including: a receiving unit configured to receive a paging message from a base station on a first non-anchor carrier of a multi-carrier cell, the paging message carrying downstream data arrival indication information and/or system message change indication information; and a processing unit configured to initiate a random access and/or receive a changed system message according to the paging message received by the receiving unit; wherein the multi-carrier cell includes an anchor carrier and a plurality of non-anchor carriers.

Optionally, the paging message received by the receiving unit carries the downlink data arrival indication information; the processing unit includes: a determining module configured to determine whether the first non-anchor carrier is configured with a corresponding random access resource; a first access module configured to, when the determining module determines that the first non-anchor carrier is configured with the corresponding random access resource, initiate random access from the first non-anchor carrier; and a second access module configured to, when the determining module determines that the first non-anchor carrier is not configured with the random access resource, jump to other non-anchor carrier or the anchor carrier and initiate random access .

Optionally, the second access module is configured to: when the other non-anchor carrier than the first non-anchor carrier is configured with the random access resource, jump to one of the non-anchor carriers configured with the random access resource and initiate random access ; and when the other non-anchor carrier than the first non-anchor carrier is not configured with the random access resource, jump to the anchor carrier and initiate random access from the anchor carrier.

Optionally, the paging message received by the receiving unit carries the system message change indication information; the processing units includes: a module configured to jump from the first non-anchor carrier to the anchor carrier according to the system message change indication information; and a system message receiving module configured to receive the changed system message on the anchor carrier.

Optionally, the apparatus further includes a selecting unit configured to, before the paging message is received from the base station on the first non-anchor carrier of the multi-carrier cell, select the anchor carrier or non-anchor carrier to receive the paging message from the base station according to a paging carrier selection policy.

Optionally, the paging carrier selection strategy includes: in a plurality of paging cycles contained in a period of time, performing modulo N arithmetic on the paging cycle sequence number, and the paging cycles with the same result utilizing the same paging carrier, where N is an integer greater than 1 and less than the paging cycle sequence number.

Optionally, the paging carrier selection strategy includes: performing time division multiplexing on the anchor carrier and each of the non-anchor carriers according to a time domain radio frame configured by the base station.

Optionally, the paging carrier selection policy includes: selecting a paging carrier based on a mapping relationship between a coverage enhancement level and a paging carrier configured by the base station.

Optionally, the apparatus further includes: a camping unit configured to camp on an anchor carrier or a non-anchor carrier of the multi-carrier cell when in a radio resource control RRC idle state.

Optionally, the apparatus further includes: a list acquiring unit configured to, when camping on the non-anchor carrier, acquire an intra-frequency cell list and an inter-frequency cell list based on a frequency point of the non-anchor carrier to perform intra-frequency measurement, inter-frequency measurement for cell reselection on the non-anchor carrier.

Optionally, the list acquiring unit includes: a first receiving module, configured to receive a first system message, the first system message including an intra-frequency cell list and an inter-frequency cell list based on the frequency point of the anchor carrier; and a converting module configured to convert the intra-frequency cell list and the inter-frequency cell list based on the frequency point of the anchor carrier into an intra-frequency cell list and an inter-frequency cell list based on a frequency point of the non-anchor carrier; or a second receiving module, configured to receive a second system message, the second system message including intra-frequency cell lists and inter-frequency cell lists with respect to the frequency point of the anchor carrier and frequency points of all non-anchor carriers.

According to another embodiment of the present disclosure, the present disclosure provides user equipment including any paging apparatus provided by the present disclosure.

According to another embodiment of the present disclosure, the present disclosure provides a paging system including a mobility management entity, a base station and any user equipment provided by the present disclosure.

According to yet another embodiment of the present disclosure, the present disclosure provides a storage medium, including a stored program, wherein the program is executed to perform any method of the above.

According to still another embodiment of the present disclosure, there is also provided a processor for running a program, wherein the program is executed to perform the method of any of the above.

In the paging method, the paging apparatus, the paging system, and user equipment, a paging message from a base station can be received on a first non-anchor carrier of a multi-carrier cell, and according to downstream data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

### BRIEF DESCRIPTION OF THE DRAWINGS

FIG. 1 is a flowchart of a paging method according to an embodiment of the present disclosure;
FIG. 2 is another flowchart of a paging method according to an embodiment of the present disclosure;
FIG. 3 is still another flowchart of a paging method according to an embodiment of the present disclosure;
FIG. 4 is a schematic diagram of behavior determination of a UE after paging monitoring has been performed on a Non Anchor carrier and an associated paging message is received according to the embodiment of the present disclosure;
FIG. 5 is a schematic diagram of behavior determination of a UE when the paging monitoring has been completed on a Non Anchor carrier and the related paging message is not received according to the embodiment of the present disclosure; and
FIG. 6 is a schematic structural diagram of a paging apparatus according to an embodiment of the present disclosure.

### DETAILED DESCRIPTION

The present disclosure will be described in detail below with reference to the accompanying drawings. It is understood that the specific embodiments described herein are merely illustrative of the disclosure and are not intended to be limiting.

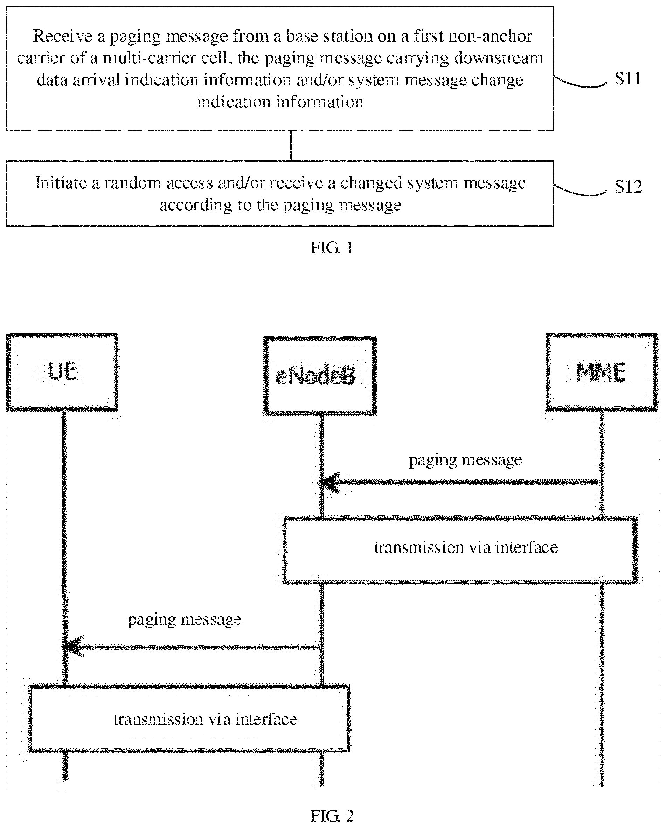

As shown in FIG. 1, an embodiment of the present disclosure provides a paging method, including the following steps.

In S11, a paging message from a base station is received on a first non-anchor carrier of a multi-carrier cell. The paging message carries downstream data arrival indication information and/or system message change indication information.

In S12, a random access is initiated and/or a changed system message is received according to the paging message.

The multi-carrier cell includes an anchor carrier and a plurality of non-anchor carriers.

In the paging method provided by the embodiment of the present disclosure, a paging message from a base station can be received on a first non-anchor carrier of a multi-carrier cell, and according to downstream data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

Optionally, when the paging message received in step S11 carries the downlink data arrival indication information, initiating the random access and/or receiving the changed system message in step S12 may include:
determining whether the first non-anchor carrier is configured with a corresponding random access resource;
when the first non-anchor carrier is configured with the corresponding random access resource, initiating random access from the first non-anchor carrier; and
when the first non-anchor carrier is not configured with the random access resource, jumping to other non-anchor carrier the anchor carrier and initiating random access .

That is, when the paging message is triggered by the arrival of the downlink data, the user equipment may receive the paging message on the non-anchor carrier, and initiate random access according to the access resource configuration, and then receive the corresponding downlink data.

Optionally, if the first non-anchor carrier is not configured with the random access resource, jumping to the other non-anchor carrier or initiating random access from the anchor carrier may include:
when the other non-anchor carrier than the first non-anchor carrier is configured with the random access resource, jumping to one of the non-anchor carriers configured with the random access resource and initiating random access ; and
when the other non-anchor carrier than the first non-anchor carrier is not configured with the random access resource, jumping to the anchor carrier and initiating random access from the anchor carrier.

For example, in one embodiment of the present disclosure, the multi-carrier cell includes one anchor carrier and five non-anchor carriers, wherein the third non-anchor carrier is configured with random access resource. When the user equipment receives the paging message on the first non-anchor carrier, and finds that the paging message carries the downlink data arrival indication information, it may jump from the first non-anchor carrier to the third non-anchor carrier to initiate random access to receive corresponding downlink data.

Optionally, in another embodiment of the present disclosure, the paging message received by the user equipment may further carry system message change indication information; the system change indication information indicating that the system message is about to be changed.

Based on this, in step S12, initiating random access, and/or receiving the changed system message according to the paging message may include:
jumping from the first non-anchor carrier to the anchor carrier according to the system message change indication information; and
receiving the changed system message on the anchor carrier.

Since the system message can only be transmitted and received through the control channel in the anchor carrier, when the user equipment is on the non-anchor carrier, if the system message has to be received, first, it has to jump to the anchor carrier according to the system message change indication information carried in the paging message, and then receive the corresponding system message on the anchor carrier.

It should be noted that, in the embodiment of the present disclosure, the user equipment is in a multi-carrier cell, which can receive the paging message from the base station using the anchor carrier, or receive the paging message from the base station using the non-anchor carrier. In order to fully utilize the frequency resources of the multi-carrier cell and also to balance the cell load, before receiving the paging message from the base station on the first non-anchor carrier of the multi-carrier cell, the anchor carrier or non-anchor carrier may be selected to receive the paging message from the base station according to the paging carrier selection policy.

Optionally, the paging carrier selection policy may be: in a plurality of paging cycles included in a period of time, the paging cycle sequence number is modulo N, and the paging cycles with the same result utilize the same paging carrier, where N is an integer greater than 1 and less than the paging cycle sequence number.

For example, in one HSFN period (i.e., 2.91 hours), the number of paging cycles of the UE is NT (the number of paging cycles may be the total number of starting superframes that can be used for paging in one HSFN period). Now let the NT paging cycles to be distributed on the Non Anchor carrier and the Anchor carrier respectively. The specific allocation method is, if the formula Ni mod N = 0 (where Ni = 1, 2, ..., NT, indicating the Ni-th cycle, and N may be specified as any value from 1 to NT) is selected, the Ni-th paging cycle that satisfies the formula is allocated on the Anchor carrier. The same configuration rules are used on both the UE side and the eNB side, so that both can be consistent in initiating paging and receiving paging.

In addition, in an embodiment of the present disclosure, the paging carrier selection policy may be performing time division multiplexing on the anchor carrier and each of the non-anchor carriers according to a time domain radio frame configured by the base station.

Specifically, the base station can separately configure a time domain radio frame corresponding to Non Anchor PRB for paging. For example, an interval method can be used. Assuming that the paging cycle is 640 ms once, if the interval is set to 1, it indicates that for an odd-numbered cycle the PRB for paging is on Non Anchor, and for an even-numbered cycle the PRB for paging is on Anchor. If the interval is set to 0, it indicates that UE is always on Non Anchor. The UE first selects a corresponding Non Anchor carrier according to the selection policy of the paging carrier, and then the UE completes paging monitoring on the corresponding carrier at the respective time domain resource location, according to the time domain resource location corresponding to the PRB configured for paging by the base station.

Optionally, the paging carrier selection policy includes: selecting a paging carrier based on a mapping relationship between a coverage enhancement level and a paging carrier configured by the base station. Specifically, in an embodiment of the present disclosure, the base station may broadcast, to each user equipment, some configuration messages, and the configuration messages may include a mapping relationship between a coverage enhancement level (CE level) of the user equipment and a paging carrier. Then, the user equipment may select the corresponding paging carrier according to its current coverage enhancement level. Optionally, the coverage enhancement level of the user equipment may be, for example, excellent, good, medium, or poor. In the corresponding relationship between the coverage enhancement level and the paging carrier, one CE level may correspond to multiple paging carriers, or one CE level may correspond to one paging carrier, or one paging carrier may correspond to multiple CE levels, which is not limited by the embodiments of the present disclosure.

Optionally, in a case where a CE level corresponds to multiple paging carriers, the user equipment may use a paging carrier selection algorithm to select an appropriate carrier, or determine an optional range of a paging carrier. In case where one CE level correspond to one paging, the user equipment can directly select the carrier corresponding to the CE level. Moreover, when paging carrier selection is performed according to the mapping relationship, each carrier may send a paging message according to the number of repetitions corresponding to its CE level.

Optionally, since the location of the user equipment may change, the signal coverage may be different. After the CE level changes, the user equipment may continue to listen to the paging message on the carrier, and search for the location for listening the paging message according to the latest CE level. In this case, since the base station cannot know the information about the change of the CE level of the user in time, the paging may fail at this time. The base station will increase the level according to the original CE level and page the UE according to the number of repetitions corresponding to the enhanced CE level. Optionally, the user equipment may also switch to the paging carrier corresponding to the changed CE level according to the change of the CE level. In this case, after the paging fails at this time, the base station may select to send a paging message in the next paging cycle on the carrier corresponding to the CE level resulted by increasing or decreasing the previous CE level by one level.

Optionally, when the UE (user equipment) is in the RRC idle state, the UE may camp on the anchor carrier or the non-anchor carrier of the multi-carrier cell. When camping on the non-anchor carrier, the UE may acquire an intra-frequency cell list and an inter-frequency cell list based on the non-anchor carrier frequency point to perform intra-frequency measurement, inter-frequency measurement for cell reselection on the non-anchor carrier.

Optionally, in an embodiment of the present disclosure, a method for acquiring an intra-frequency cell list and an inter-frequency cell list based on the non-anchor carrier frequency point may include:
receiving a first system message, the first system message including an intra-frequency cell list and an inter-frequency cell list based on the anchor carrier frequency point; and
converting the intra-frequency cell list and the inter-frequency cell list based on the anchor carrier frequency point into an intra-frequency cell list and an inter-frequency cell list based on the non-anchor carrier frequency point.

That is, when the UE camps on the non-anchor carrier, the paging message may be received, and the paging message carries the system message change indication information. The UE may jump to the anchor carrier according to the system message change indication information, to receive the first system message on the anchor carrier. Included in the first system message is an intra-frequency cell list and an inter-frequency cell list based on the anchor carrier frequency point. In order to determine whether each cell in the cell list with respect to each non-anchor carrier is an intra-frequency or an inter-frequency, the intra-frequency cell list and the inter-frequency cell list based on the anchor carrier frequency point have to be converted into an intra-frequency cell list and an inter-frequency cell list based on the non-anchor carrier frequency point.

Optionally, in another embodiment of the present disclosure, a method for obtaining an intra-frequency cell list and an inter-frequency cell list based on the non-anchor carrier frequency point may include receiving a second system message, and the second system message includes intra-frequency cell lists and inter-frequency cell lists with respect to the anchor carrier frequency point and all non-anchor carrier frequency points. That is to say, in the second system message, the base station directly lists the intra-frequency cell and the inter-frequency cell corresponding to each non-anchor carrier, respectively, thereby reducing the calculation amount of the UE.

The paging method provided by the present disclosure will be described in detail below through specific embodiments in conjunction with the accompanying drawings.

In the LTE system, when data is to be sent to a UE in an idle state (i.e., the RRC state is RRC-IDLE), the MME (Mobility Management Entity) has to send a paging message to all eNodeBs in the Tracking Area (TA) in which the UE is registered, and the eNodeB sends a paging message to notify the UE, as shown in FIG. 2. The UE listens to the paging message at the corresponding location according to the calculation formula of the paging occasion (PO). When the UE receives the paging message, it will initiate an RRC connection request to receive the downlink data. After transmitting the paging message, and MME determines whether the current paging is successfully received by the UE according to whether the UE performs the corresponding action subsequently. If the paging message is not successfully received by the UE, the MME will continue to page the user in the next paging cycle.

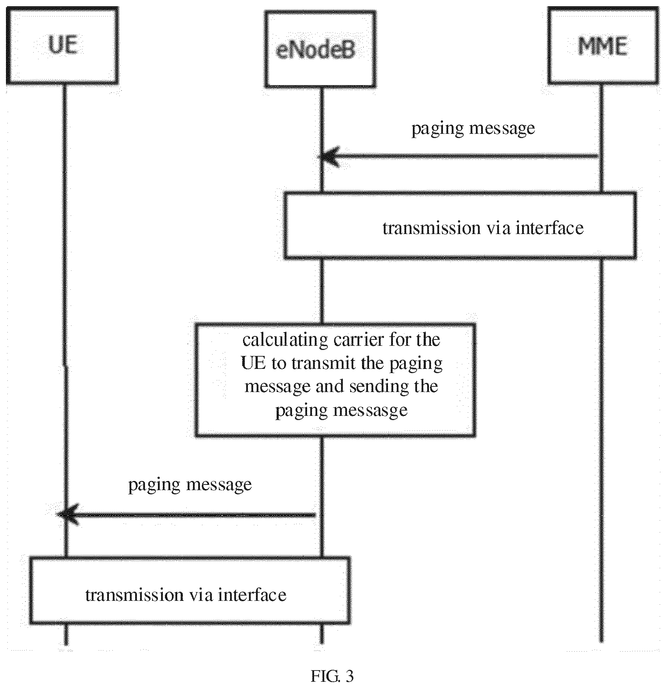

FIG. 3 is a flowchart of a multi-carrier paging transmission process provided by the present disclosure. As shown in FIG. 3, after the eNodeB receives the paging message sent by the MME, the eNodeB interprets the content thereof to obtain UE-ID information. According to the paging carrier carried by the paging message of the UE, a paging message is sent on the corresponding paging carrier. At the same time, the UE will listen to the paging message on the paging carrier carried by the paging message. For a UE with an enhanced CE level, the eNodeB repeatedly sends a paging message on the paging carrier during a paging cycle.

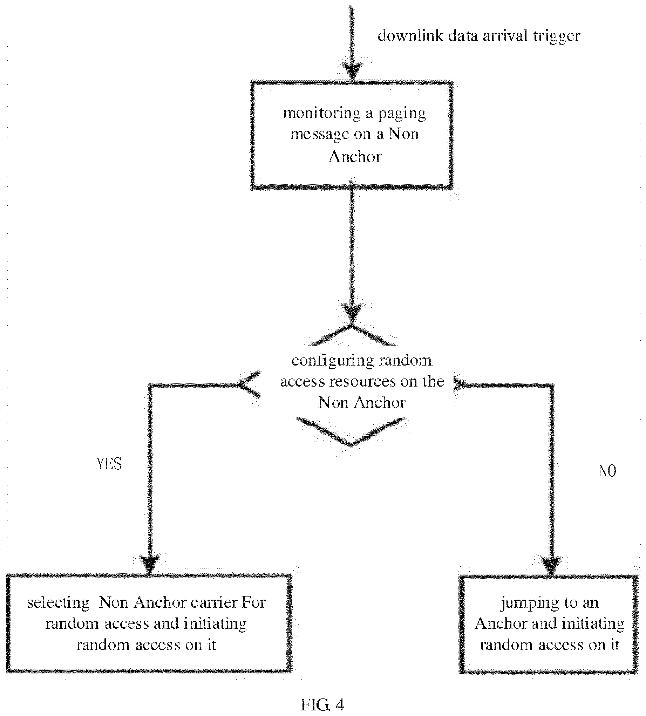

FIG. 4 shows the behavior decision of the UE after the paging monitoring is performed on the Non Anchor carrier and the related paging message is received for the UE that has selected the Non Anchor carrier with the paging selection policy. As shown in FIG. 4, if the paging message monitored by the UE is triggered by the arrival of the downlink data, the UE will initiate random access on the Non Anchor carrier or jump to the Anchor carrier to initiate random access, which may be specifically determined by configuration of the random access resources. If the Non Anchor carrier is configured with resources for transmitting a random access preamble sequence, the UE selects the Non Anchor carrier and initiates random access thereon, that is, selects the corresponding Non Anchor carrier according to the configuration of the PRACH carrier and the PRACH carrier selection policy and initiate random access . If the Non Anchor carrier is not configured with the resource for transmitting the random access preamble sequence, and only the Anchor carrier is configured with the resource for transmitting the random access preamble sequence, the UE will jump to the Anchor carrier and initiate random access.

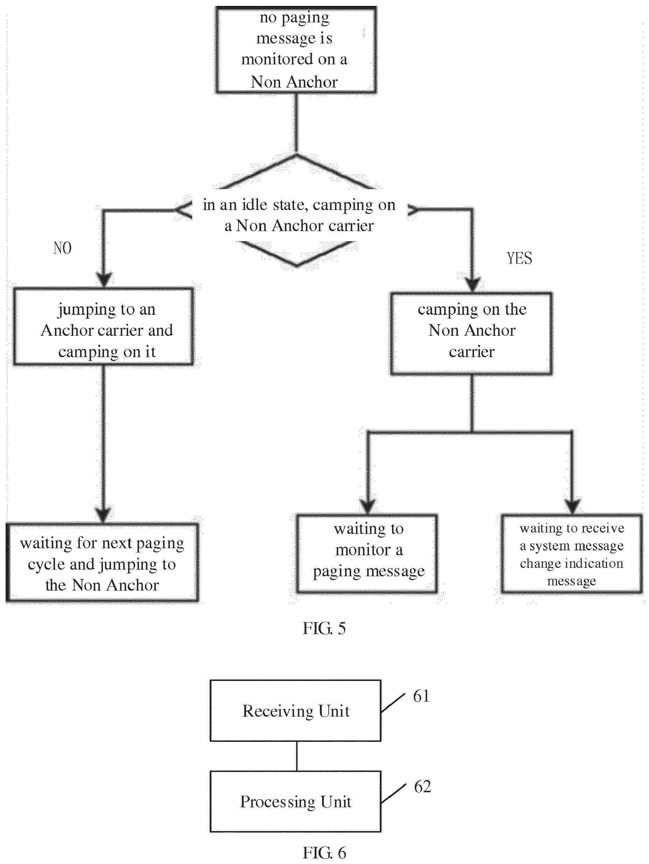

FIG. 5 shows the behavior decision of the UE after the paging monitoring is performed on the Non Anchor carrier and the related paging message is not received for the UE that has selected the Non Anchor carrier with the paging selection policy. As shown in FIG. 5, after the UE performs the paging monitoring on the Non Anchor carrier, when the relevant paging message is not received, preferably, the UE will continue to stay on the Non Anchor carrier until the change indication information of the system message carried in the paging message is received, so as to jump to the Anchor carrier to receive the paging message, or until the downlink data arrival information carried in the paging message is monitored, and then select to initiate random access between the Anchor carrier and the Non Anchor carrier. That is to say, the UE in the idle state camps on the Non Anchor carrier, which can reduce the number of handovers between the Anchor carrier and the Non Anchor carrier, and reduce the power consumption caused by the inter-carrier handover. The UE may also jump to camp on the Anchor carrier, that is, the UE in the idle state may camp on the Anchor carrier.

For the UE that is idle on the Anchor carrier, when the UE has to receive the paging message, the UE may select the paging carrier according to the selection method of the paging carrier to perform monitoring and receiving of the paging message. According to the carrier selection method, a certain Non Anchor carrier may be selected. In this case, the UE has to jump to the Non Anchor carrier to listen to the paging message. It is also possible to select the resident Anchor carrier according to the carrier selection method and then directly listen to the paging message on the carrier. The definition of the paging carrier list in the paging carrier selection method may only contain the Non Anchor carrier list or may contain not only the Non Anchor carrier list but also the Anchor carrier.

Correspondingly, as shown in FIG. 6, an embodiment of the present disclosure further provides a paging apparatus, including the following components.

A receiving unit 61 is configured to receive a paging message from a base station on a first non-anchor carrier of a multi-carrier cell, the paging message carrying downstream data arrival indication information and/or system message change indication information.

A processing unit 62 is configured to initiate random access, and/or receive the changed system message according to the paging message received by the receiving unit.

The multi-carrier cell includes an anchor carrier and a plurality of non-anchor carriers.

In the paging apparatus provided by the embodiment of the present disclosure, the receiving unit 61 can receive a paging message from a base station on a first non-anchor carrier of a multi-carrier cell, and the processing unit 62, according to downstream data arrival indication information and/or system message change indication information carried in the paging message, can initiate a random access and/or receive a changed system message according to the paging message. In this way, when the user equipment is paged by the base station, the non-anchor carrier resources in the multi-carrier cell can be fully utilized to receive the paging message, which can greatly expand the paging capacity and make the paging load more balanced.

Optionally, the paging message received by the receiving unit 61 carries the downlink data arrival indication information.

The processing unit 62 can include:
a determining module, configured to determine whether the first non-anchor carrier is configured with a corresponding random access resource;
a first access module, configured to, when the determining module determines that the first non-anchor carrier is configured with the corresponding random access resource, initiate random access from the first non-anchor carrier; and
a second access module, configured to: when the determining module determines that the first non-anchor carrier is not configured with the random access resource, jump to other non-anchor carrier or the anchor carrier and initiate random access .

Optionally, the second access module is configured to:
when the other non-anchor carrier than the first non-anchor carrier is configured with the random access resource, jump to one of the non-anchor carriers configured with the random access resource and initiating random access ; and
when the other non-anchor carrier than the first non-anchor carrier is not configured with the random access resource, jump to the anchor carrier and initiate random access from the anchor carrier.

Optionally, the paging message received by the receiving unit 61 carries the system message change indication information.

The processing unit 62 may include:
a jumping module configured to jump from the first non-anchor carrier to the anchor carrier according to the system message change indication information; and
a system message receiving module configured to receive a changed system message on the anchor carrier.

Optionally, the paging apparatus provided by the embodiment of the present disclosure may further include: a selecting unit configured to, before receiving the paging message from the base station on the first non-anchor carrier of the multi-carrier cell, select the anchor carrier or non-anchor carrier to receive the paging message from the base station according to the paging carrier selection policy.

Optionally, the paging carrier selection policy may include: in a plurality of paging cycles included in a period of time, the paging cycle sequence number is modulo N, and the paging cycles with the same result utilize the same paging carrier, where N is an integer greater than 1 and less than the paging cycle sequence number.

Optionally, the paging carrier selection policy may further include performing time division multiplexing on the anchor carrier and each of the non-anchor carriers according to a time domain radio frame configured by the base station.

Optionally, the paging carrier selection policy includes: selecting a paging carrier based on a mapping relationship between a coverage enhancement level and a paging carrier configured by the base station. Specifically, in an embodiment of the present disclosure, the base station may broadcast, to each user equipment, some configuration message, and the configuration message may include a mapping relationship between a coverage enhancement level (CE level) of the user equipment and a paging carrier. Then, the user equipment may select the corresponding paging carrier according to its current coverage enhancement level. Optionally, the coverage enhancement level of the user equipment may be, for example, excellent, good, medium, or poor. In the corresponding relationship between the coverage enhancement level and the paging carrier, one CE level may correspond to multiple paging carriers, or one CE level may correspond to one paging carrier, or one paging carrier may correspond to multiple CE levels, which is not limited by the embodiments of the present disclosure.

Optionally, in a case where a CE level corresponds to multiple paging carriers, the user equipment may use a paging carrier selection algorithm to select an appropriate carrier, or determine an optional range of a paging carrier. In case where one CE level correspond to one paging, the user equipment can directly select the carrier corresponding to the CE level. Moreover, when paging carrier selection is performed according to the mapping relationship, each carrier may send a paging message according to the number of repetitions corresponding to its CE level.

Optionally, since the location of the user equipment may change, the signal coverage may be different. After the CE level changes, the user equipment may continue to listen to the paging message on the carrier, and search for the location for listening the paging message according to the latest CE level. In this case, since the base station cannot know the information about the change of the CE level of the user in time, the paging may fail at this time. The base station will increase the level according to the original CE level and page the UE according to the number of repetitions corresponding to the enhanced CE level. Optionally, the user equipment may also switch to the paging carrier corresponding to the changed CE level according to the change of the CE level. In this case, after the paging fails at a certain time, the base station may select to send a paging message in the next paging cycle on the carrier corresponding to the CE level resulted by increasing or decreasing the previous CE level by one level.

Optionally, the paging apparatus provided by the embodiment of the present disclosure may further include: a camping unit configured to camp on an anchor carrier or a non-anchor carrier of the multi-carrier cell when in a radio resource control RRC idle state.

Optionally, the paging apparatus provided by the embodiment of the present disclosure may further include a list acquiring unit, configured to acquire an intra-frequency cell list and an inter-frequency cell list based on the non-anchor carrier frequency point to perform intra-frequency measurement, inter-frequency measurement for cell reselection on the non-anchor carrier.

Optionally, the list acquiring unit may include: a first receiving module, configured to receive a first system message, the first system message including an intra-frequency cell list and an inter-frequency cell list based on the anchor carrier frequency point; and a converting module configured to convert the intra-frequency cell list and the inter-frequency cell list based on the anchor carrier frequency point into an intra-frequency cell list and an inter-frequency cell list based on the non-anchor carrier frequency point.

Optionally, the list acquiring unit may further include: a second receiving module, configured to receive a second system message, and the second system message includes intra-frequency cell lists and inter-frequency cell lists with respect to the anchor carrier frequency point and all non-anchor carrier frequency points.

Correspondingly, an embodiment of the present disclosure further provides user equipment, including any paging apparatus provided by the foregoing embodiments, and thus can achieve corresponding technical effects. The foregoing has been described in detail, and details are not repeated herein.

Correspondingly, an embodiment of the present disclosure further provides a paging system, including a mobility management entity, a base station, and any user equipment provided by an embodiment of the present disclosure, and thus can achieve corresponding technical effects. The foregoing has been described in detail, and details are not repeated herein.

It is to be understood that the terms "including", "comprising", or any other variants thereof, are intended to encompass a non-exclusive inclusion, such that a process, method, article, or device comprising a series of elements includes not only those elements, but also other elements that are not explicitly listed, or elements that are inherent to such a process, method, article, or device. An element that is defined by the phrase "comprising a ..." does not exclude the presence of additional equivalent elements in the process, method, article, or device that comprises the element.

Through the description of the above embodiments, those skilled in the art can clearly understand that the foregoing embodiment method can be implemented by means of software in conjunction with a necessary general hardware platform, and however, can also be implemented by hardware, but in many cases, the former is better implementation. Based on such understanding, portions of the technical solution of the present disclosure that contribute substantially or to the related art may be embodied in the form of a software product stored in a storage medium (e.g., ROM/RAM, a disk, a CD) , including a plurality of instructions for causing a terminal device (which may be a mobile phone, a computer, a server, an air conditioner, or a network disk, etc.) to perform the method described in various embodiments of the present disclosure.

The above is only preferred embodiments of the present disclosure, and is not intended to limit the scope of the patents of the present disclosure, and the equivalent structure or equivalent process transformations made by the present disclosure and the contents of the drawings may be directly or indirectly applied to other related technical fields. The same is included in the scope of patent protection of the present disclosure.

### Industrial Applicability

As described above, a paging method, a paging apparatus, and a paging system, and user equipment provided by the embodiments of the present disclosure have the following beneficial effects. A paging message from a base station can be received on a first non-anchor carrier of a multi-carrier cell, and according to downstream data arrival indication information and/or system message change indication information carried in the paging message, a random access is initiated and/or a changed system message is received according to the paging message. In this way, when the user equipment is paged by the base station, the non-anchor carrier resources in the multi-carrier cell can be fully utilized to receive the paging message, which can greatly expand the paging capacity and make the paging load more balanced.

Also disclosed herein are the following items:
1. A paging method, comprising:
   receiving a paging message from a base station on a first non-anchor carrier of a multi-carrier cell, wherein the paging message carries downstream data arrival indication information and/or system message change indication information; and
   initiating a random access and/or receiving a changed system message according to the paging message;
   wherein the multi-carrier cell comprises an anchor carrier and a plurality of non-anchor carriers.
2. The method according to item 1, wherein the paging message carries the downlink data arrival indication information;
   the initiating a random access and/or receiving a changed system message according to the paging message comprises:
   determining whether the first non-anchor carrier is configured with a corresponding random access resource;
   when the first non-anchor carrier is configured with the corresponding random access resource, initiating random access from the first non-anchor carrier; and
   when the first non-anchor carrier is not configured with the random access resource, jumping to other non-anchor carrier or the anchor carrier and initiating random access.
3. The method according to item 2, wherein when the first non-anchor carrier is not configured with the random access resource, jumping to other non-anchor carrier or the anchor carrier and initiating random access comprises:
   when the other non-anchor carrier than the first non-anchor carrier is configured with the random access resource, jumping to one of the non-anchor carriers configured with the random access resource and initiating random access ; and
   when the other non-anchor carrier than the first non-anchor carrier is not configured with the random access resource, jumping to the anchor carrier and initiating random access from the anchor carrier.
4. The method according to item 1, wherein the paging message carries the system message change indication information;
   the initiating a random access and/or receiving a changed system message according to the paging message comprises:
   jumping from the first non-anchor carrier to the anchor carrier according to the system message change indication information; and
   receiving the changed system message on the anchor carrier.
5. The method according to item 1, wherein before receiving the paging message from the base station on the first non-anchor carrier of the multi-carrier cell, the method further comprises:
   selecting the anchor carrier or a non-anchor carrier to receive the paging message from the base station according to a paging carrier selection policy.
6. The method according to item 5, wherein the paging carrier selection strategy comprises:
   in a plurality of paging cycles contained in a period of time, performing modulo N arithmetic on the paging cycle sequence number, and the paging cycles with the same result utilizing the same paging carrier, where N is an integer greater than 1 and less than the paging cycle sequence number.
7. The method according to item 5, wherein the paging carrier selection strategy comprises:
   performing time division multiplexing on the anchor carrier and each of the non-anchor carriers according to a time domain radio frame configured by the base station.
8. The method according to item 5, wherein the paging carrier selection policy comprises selecting a paging carrier based on a mapping relationship between a coverage enhancement level and a paging carrier configured by the base station.
9. The method according to any one of items 1 to 8, further comprising:
   when in an RRC idle state, camping on the anchor carrier or the non-anchor carrier of the multi-carrier cell.
10. The method according to item 9, further comprising:
   when camping on the non-anchor carrier, acquiring an intra-frequency cell list and an inter-frequency cell list based on a frequency point of the non-anchor carrier to perform intra-frequency measurement, or inter-frequency measurement for cell reselection on the non-anchor carrier.
11. The method according to item 10, wherein the acquiring an intra-frequency cell list and an inter-frequency cell list based on a frequency point of the non-anchor carrier comprises:
   receiving a first system message, the first system message comprising an intra-frequency cell list and an inter-frequency cell list based on the frequency point of the anchor carrier; and
   converting the intra-frequency cell list and the inter-frequency cell list based on the frequency point of the anchor carrier into an intra-frequency cell list and an inter-frequency cell list based on a frequency point of the non-anchor carrier;
   or
   receiving a second system message, the second system message comprising intra-frequency cell lists and inter-frequency cell lists with respect to the frequency point of the anchor carrier and frequency points of all non-anchor carriers.
12. A paging apparatus, comprising:
   a receiving unit configured to receive a paging message from a base station on a first non-anchor carrier of a multi-carrier cell, wherein the paging message carries downstream data arrival indication information and/or system message change indication information; and
   a processing unit configured to initiate a random access and/or receive a changed system message according to the paging message received by the receiving unit;
   wherein the multi-carrier cell comprises an anchor carrier and a plurality of non-anchor carriers.
13. The apparatus according to item 12, wherein the paging message received by the receiving unit carries the downlink data arrival indication information;
   the processing unit comprises:
   a determining module configured to determine whether the first non-anchor carrier is configured with a corresponding random access resource;
   a first access module configured to, when the determining module determines that the first non-anchor carrier is configured with the corresponding random access resource, initiate random access from the first non-anchor carrier; and
   a second access module configured to, when the determining module determines that the first non-anchor carrier is not configured with the random access resource, jump to other non-anchor carrier or the anchor carrier and initiate random access .
14. The apparatus according to item 13, wherein the second access module is configured to:
   when the other non-anchor carrier than the first non-anchor carrier is configured with the random access resource, jump to one of the non-anchor carriers configured with the random access resource and initiate random access ; and
   when the other non-anchor carrier than the first non-anchor carrier is not configured with the random access resource, jump to the anchor carrier and initiate random access from the anchor carrier.
15. The apparatus according to item 12, wherein the paging message received by the receiving unit carries the system message change indication information;
   the processing units comprises:
   a jumping module configured to jump from the first non-anchor carrier to the anchor carrier according to the system message change indication information; and
   a system message receiving module configured to receive the changed system message on the anchor carrier.
16. The apparatus according to item 12, further comprises a selecting unit configured to, before the paging message is received from the base station on the first non-anchor carrier of the multi-carrier cell, select the anchor carrier or non-anchor carrier to receive the paging message from the base station according to a paging carrier selection policy.
17. The apparatus according to item 16, wherein the paging carrier selection strategy comprises:
   in a plurality of paging cycles contained in a period of time, performing modulo N arithmetic on the paging cycle sequence number, and the paging cycles with the same result utilizing the same paging carrier, where N is an integer greater than 1 and less than the paging cycle sequence number.
18. The apparatus according to item 16, wherein the paging carrier selection strategy comprises:
   performing time division multiplexing on the anchor carrier and each of the non-anchor carriers according to a time domain radio frame configured by the base station.
19. The apparatus according to item 16, wherein the paging carrier selection policy comprises: selecting a paging carrier based on a mapping relationship between a coverage enhancement level and a paging carrier configured by the base station.
20. The apparatus according to any one of items 12 to 19, further comprising:
   a camping unit configured to camp on an anchor carrier or a non-anchor carrier of the multi-carrier cell when in a radio resource control RRC idle state.
21. The apparatus according to item 20, further comprising:
   a list acquiring unit configured to, when camping on the non-anchor carrier, acquire an intra-frequency cell list and an inter-frequency cell list based on a frequency point of the non-anchor carrier to perform intra-frequency measurement, inter-frequency measurement for cell reselection on the non-anchor carrier.
22. The apparatus according to item 21, wherein the list acquiring unit comprises:
   a first receiving module configured to receive a first system message, the first system message comprising an intra-frequency cell list and an inter-frequency cell list based on the frequency point of the anchor carrier; and
   a converting module configured to convert the intra-frequency cell list and the inter-frequency cell list based on the frequency point of the anchor carrier into an intra-frequency cell list and an inter-frequency cell list based on a frequency point of the non-anchor carrier;
   or
   a second receiving module configured to receive a second system message, the second system message comprising intra-frequency cell lists and inter-frequency cell lists with respect to the frequency point of the anchor carrier and frequency points of all non-anchor carriers.
23. User equipment comprising the paging apparatus of any one of items 12 to 22.
24. A paging system comprising a mobility management entity, a base station and the user equipment according to item 23.
25. A storage medium, comprising stored program, wherein the program is executed to perform the method according to any one of items 1 to 11.

## Claims

1. A paging method, applied in a User Equipment, UE, comprising;
selecting an anchor carrier or a non-anchor carrier to receive a paging message from a base station according to a paging carrier selection policy.

2. The method according to claim 1, wherein the paging carrier selection policy comprises selecting a paging carrier based on a mapping relationship between a coverage enhancement, CE, level and a paging carrier configured by the base station.

3. The method according to claim 2, wherein in the mapping relationship between the coverage enhancement level and the paging carrier, one CE level corresponds to multiple paging carriers, or one CE level corresponds to one paging carrier.

4. The method according to claim 1, further comprising:
when in an RRC idle state, camping on the anchor carrier or the non-anchor carrier of a multi-carrier cell.

5. The method according to claim 4, further comprising:
when camping on the non-anchor carrier, acquiring an intra-frequency cell list and an inter-frequency cell list based on a frequency point of the non-anchor carrier to perform intra-frequency measurement, or inter-frequency measurement for cell reselection on the non-anchor carrier.

6. The method according to claim 4, further comprising:
receiving a second system message, wherein the second system message comprises intra-frequency cell lists and inter-frequency cell lists with respect to frequency point of the anchor carrier and frequency points of all non-anchor carriers.

7. The method according to claim 1, further comprising:
receiving a configuration message broadcasted by the base station to each UE, wherein the configuration message comprises a mapping relationship between a CE level of the UE and a paging carrier.

8. A paging method, applied in a base station, comprising;
selecting, by the base station, an anchor carrier or a non-anchor carrier to send a paging message according to a paging carrier selection policy.

9. The method according to claim 8, wherein the paging carrier selection policy comprises selecting a paging carrier based on a mapping relationship between a coverage enhancement, CE, level and a paging carrier configured by the base station.

10. The method according to claim 9, wherein in the mapping relationship between the coverage enhancement level and the paging carrier, one CE level corresponds to multiple paging carriers, or one CE level corresponds to one paging carrier.

11. The method according to claim 8, further comprising:
sending a second system message, wherein the second system message comprises intra-frequency cell lists and inter-frequency cell lists with respect to a frequency point of the anchor carrier and frequency points of all non-anchor carriers.

12. The method according to claim 8, further comprising:
broadcasting, by the base station, a configuration message to each UE, wherein the configuration message comprises a mapping relationship between a CE level of a UE and a paging carrier.

13. A paging apparatus, applied in a User Equipment, UE, comprising:
at least one processor; and
at least one memory, which is coupled to the at least one processor and is configured to store instructions for executing the paging method of any one of claims 1 to 7.

14. A paging apparatus, applied in a base station, comprising:
at least one processor; and
at least one memory, which is coupled to the at least one processor and is configured to store instructions for executing the transmission method of any one of claims 8 to 12.

15. A storage medium, comprising stored program, wherein the program is executed to perform the method according to any one claims 1 to 12.
